# EUROPEAN PATENT SPECIFICATION

(11) **EP 3 840 967 B1**
(45) Date of publication and mention of the grant of the patent: **16.04.2025**
(21) Application number: 19851258.4
(22) Date of filing: 20.08.2019
(51) Int. Cl.: B60G 17/016, B60W 50/00, H04W 4/44, B60P 1/44, B60P 3/42, B62D 63/02, B60G 17/0165, B60K 7/00, H04L 67/125, B60K 17/356

(54) **A METHOD, PERFORMED BY A CONTROL DEVICE, FOR CONTROLLING A VEHICLE HEIGHT IN RELATION TO THE ROAD SURFACE AND A MODULARISED VEHICLE COMPRISING SUCH A CONTROL DEVICE**
VERFAHREN, DAS VON EINEM STEUERGERÄT DURCHGEFÜHRT WIRD, ZUM STEUERN EINER FAHRZEUGHÖHE IN BEZUG AUF DIE FAHRBAHN UND EIN MODULARISIERTES FAHRZEUG MIT EINER SOLCHEN STEUERVORRICHTUNG
PROCÉDÉ, MIS EN OEUVRE PAR UN DISPOSITIF DE RÉGLAGE, POUR RÉGLER UNE HAUTEUR DE VÉHICULE PAR RAPPORT À LA SURFACE DE LA ROUTE ET VÉHICULE MODULARISÉ COMPRENANT LEDIT DISPOSITIF DE RÉGLAGE

(30) Priority: 24.08.2018 SE 1851007
(43) Date of publication of application: 30.06.2021
(73) Proprietor: Scania CV AB, 151 87 Södertälje (SE)
(72) Inventor: CLAESSON, André, 146 38 Tullinge (SE); SJÖDIN, Robert, 611 44 Nyköping (SE); ÄHRLIG, Linus, 137 37 Västerhaninge (SE); TEPPOLA, Sami, 155 31 Nykvarn (SE); KALLIO, Mikko, 153 71 Hölö (SE); SKEPPSTRÖM, Tomas, 151 39 Södertälje (SE); COLLING, Morgan, 153 94 Hölö (SE)
(74) Representative: Scania CV AB
(86) International application number: PCT/SE2019/050763
(87) International publication number: WO 2020/040685

(56) References cited:
- EP-A2- 1 228 905
- EP-A2- 1 787 613
- WO-A1-2006/071169
- WO-A1-2018/046250
- WO-A1-2018/046250
- FR-A1- 3 056 183
- SE-A1- 1 450 645
- US-A1- 2005 021 205
- US-A1- 2008 272 562
- US-A1- 2017 197 679
- US-A1- 2017 197 679
- US-A1- 2018 059 688

## Description

### TECHNICAL FIELD

The invention relates to a method, performed by a control device, for controlling a vehicle height in relation to the road surface. The invention further relates to a computer program, a computer-readable medium, a control device and a modularised vehicle according to the appended claims.

### BACKGROUND

Vehicles of today are typically manufactured for a specific purpose, e.g. a bus is manufactured for transporting people and a truck is manufactured for transporting goods. Such vehicles are typically manufactured and completely assembled in a factory or they may be partly assembled in a factory and completed at a body manufacturer. Once the vehicle is assembled, the vehicle may be used for the specific purpose. Thus, a bus may be used as a bus and a garbage truck may be used as a garbage truck. Different vehicles are thus needed for different purposes, which may require a large fleet of vehicles and which may be very costly. It may therefore be desired to be able to customize a vehicle depending on different missions.

There are, for example, known solutions where a truck can be rebuilt by changing a concrete mixer to a loading platform. This increases the flexibility and two different functions can be achieved by means of one single vehicle. Also, document US-2016/0129958 A discloses a modular electric vehicle using interchangeable vehicle assembly modules. The user can thereby disassemble and reassemble the vehicle for use in different applications. Disassembling and reassembling such a vehicle would, however, be a very cumbersome and time consuming work. Furthermore, when a failure occurs in one of the known vehicle modules it may be difficult to replace the failing module, which may result in that the vehicle may be unusable for a considerable period of time. It may also be cumbersome to transport the replacing module to the site of the vehicle with the failing module. US2017/197679 A1 discloses a method, performed by a control device, for controlling a vehicle height according to the preamble of claim 1.

Despite known solutions in the art, it is desired to facilitate and minimize the time for boarding and exit a vehicle. It is also desired to facilitate and minimize the time for loading and unloading of a vehicle. It is also desired to increase security and minimize damages at boarding and exit a vehicle. It is also desired to increase security and minimize damages at loading and unloading of a vehicle.

An object of the invention is therefore to facilitate and minimize the time for boarding and exit a vehicle.

Another object of the invention is to facilitate and minimize the time for loading and unloading of a vehicle.

A further object of the invention is to increase security and minimize damages at boarding and exit a vehicle.

A further object of the invention is to increase security and minimize damages at loading and unloading of a vehicle.

The herein mentioned objects are achieved with a method, performed by a control device, for controlling a vehicle height in relation to the road surface. The herein mentioned objects are also achieved with a computer program, a computer-readable medium, a control device and a modularised vehicle, assembled from a set of modules according to the appended claims.

According to the invention a method is performed by a control device according to claim 1.

According to the invention a control device is provided according to claim 7.

By such a method and control device, boarding and exit the vehicle is facilitated. The time is minimized, the security is increased and damages minimized boarding and exit the vehicle. Also, loading and unloading of the vehicle is facilitated. The time is minimized, the security is increased and damages minimized when loading and unloading of the vehicle.

The information about a platform height above the road surface at a target destination is received before the vehicle is arriving at the target destination. The information may be received close to the moment when the vehicle is arriving at the target destination. However, it is also possible that the information about the platform height is received once the vehicle is assembled from the individual modules. As soon as there is a change in platform height above the road surface at a target destination, the vehicle may receive updated information about the platform height. A change in platform height above the road surface may take place due to reconstruction of the road and/or the platform.

The vehicle height is controlled before arriving at the target destination. The vehicle height may be so controlled that a specific component of the vehicle is changing height. According to the invention vehicle height is controlled before arriving at the target destination, so that the floor surface of the at least one functional module may have a level above the road surface corresponding to the level of the platform surface above the road surface at the target destination. The level of the platform surface above the road surface may be the same level as the platform height above the road surface. The level of the floor surface above the road surface may be the same level as a floor surface height above the road surface.

Additional objectives, advantages and novel features of the invention will be apparent to one skilled in the art from the following details, and through exercising the invention. While the invention is described below, it should be apparent that the invention may not be limited to the specifically described details. One skilled in the art, having access to the teachings herein, will recognize additional applications, modifications and incorporations in other areas.

### BRIEF DESCRIPTION OF THE DRAWINGS

Below is a description of, as examples, preferred embodiments with reference to the enclosed drawings, in which:
Figures 1a and 1b schematically illustrate side views of a modularised vehicle provided with a control device according to an embodiment;
Figure 2 schematically illustrates a drive module provided with a control device according to an embodiment;
Figures 3a and 3b schematically illustrate section views of a modularised vehicle controlled at different heights according to an embodiment;
Figures 4a and 4b schematically illustrate section views of a modularised vehicle controlled at different heights according to an embodiment;
Figure 5a illustrates a flow chart for a method, performed by a control device, for controlling the height of a modularised vehicle according to an embodiment;
Figure 5b illustrates a flow chart for a method, performed by a control device, for controlling the height of a modularised vehicle according to an embodiment; and
Figure 6 schematically illustrates a control device or computer according to an embodiment.

### DETAILED DESCRIPTION

Modularised vehicles are typically assembled at the customer's premises and the customer may thus buy a set of modules from a manufacturer. The assembled vehicle may comprise at least two modules including at least one drive module and at least one functional module. Such a modularised vehicle is applicable on all sorts of road vehicles and may thus relate to heavy vehicles, such as buses, trucks etc., which may be used on public roads.

The method, performed by the control device, for controlling the vehicle height in relation to the road surface will facilitate boarding and exit of the modularised vehicle. Boarding and exit of the modularised vehicle will be less time consuming. The security will be increased and damages minimized when boarding and exit the vehicle. Also, loading and unloading the modularised vehicle will be facilitated, the time for loading and unloading minimized, the security increased and damages minimized.

According to an aspect, the present disclosure relates to a method, performed by a control device, for controlling a vehicle height in relation to the road surface, the vehicle comprising at least one drive module; and at least one functional module, wherein the at least one drive module comprises a pair of wheels and is configured to be autonomously operated and drive the vehicle; and wherein the control device is comprised in any of the modules, the method comprising: receiving information about a platform height above the road surface at a target destination; and controlling the vehicle height before arriving at the target destination, so that a floor surface of the at least one functional module has a level corresponding to the level of the platform surface at the target destination.

By such a method, boarding and exit the vehicle is facilitated. The time is minimized, the security is increased and damages minimized boarding and exit the vehicle. Also, loading and unloading of the vehicle is facilitated. The time is minimized, the security is increased and damages minimized when loading and unloading of the vehicle.

The information about a platform height above the road surface at a target destination is received before the vehicle is arriving at the target destination. The information may be received close to the moment when the vehicle is arriving at the target destination. However, it is also possible that the information about the platform height is received once the vehicle is assembled from the individual modules. As soon as there is a change in platform height above the road surface at a target destination, the vehicle may receive updated information about the platform height. A change in platform height above the road surface may take place due to reconstruction of the road and/or the platform.

The vehicle height is controlled before arriving at the target destination. The vehicle height may be so controlled that a specific component of the vehicle is changing height. The vehicle height is controlled before arriving at the target destination, so that the floor surface of the at least one functional module may have a level above the road surface corresponding to the level of the platform surface above the road surface at the target destination. The level of the platform surface above the road surface may be the same level as the platform height above the road surface. The level of the floor surface above the road surface may be the same level as a floor surface height above the road surface. The definition that a floor surface of the at least one functional module has a level corresponding to the level of the platform surface at the target destination comprises that the levels correspond exactly to each other or that there is some difference between the levels. The difference between the levels may be very small, and will not affect boarding and exit the vehicle or loading and unloading of the vehicle. Controlling of the vehicle height may set a number of software marks (flags) of the control device. **If** the vehicle height is larger than the platform height a first flag may be set in a software of the control device. **If** the vehicle height is smaller than the platform height a second flag may be set in the software of the control device. If the vehicle height already correspond to the platform height a third flag may be set in the software of the control device. Depending on the flag set, the control device controls the vehicle to a vehicle height that correspond to the platform height at the target destination, so that the, so that a floor surface of the functional module has a level corresponding to the level of the platform surface at the target destination.

At least one drive module may be used together with different functional modules. The functional modules may be designed for specific purposes. Therefore, by combining a drive module with a suitable functional module, it is possible to customize a vehicle depending on different missions. A functional module may be prepared to perform a specific function and the autonomously operated drive module may connect with the functional module to achieve an assembled vehicle customized for a certain mission. For example, the at least one functional module may be configured with a passenger compartment for accommodating passengers and may thus function as a bus when being assembled with the at least one drive module. According to another example, the at least one functional module may be configured with a load compartment for accommodating load and goods and may thus function as a truck when being assembled with the at least one drive module.

The information received about a platform height above the road surface at a target destination may be compared to the actual vehicle height in relation to the road surface, which vehicle height is present when the vehicle approaching the platform with the specific platform height at the target destination. The vehicle height present when the vehicle approaching the platform may be a vehicle height used when driving the vehicle during normal driving conditions. However the vehicle height used when driving the vehicle during normal driving conditions may vary depending on the weight of the passengers and/or the loaded goods within the functional module. Thus, the vehicle height present when the vehicle approaching the platform may be detected by means of a height sensor device. The height sensor device may also be used during controlling the vehicle height before arriving at the target destination, so that a floor surface of the at least one functional module has a level corresponding to the level of the platform surface at the target destination. When receiving information about a platform height above the road surface at the target destination, the vehicle height may be controlled based on detected height information from the height sensor device.

The at least one drive module and thus the assembled vehicle may be configured to be autonomously operated. The control device comprised in the functional module may be configured to receive commands and instructions from a control centre or an off-board system and to execute the commands/instructions for driving the vehicle and also for controlling the vehicle height in relation to the road surface. This way, the assembled vehicle can drive itself based on the received commands and instructions. The control device comprised in any one of the modules may control the assembled vehicle to be autonomously driven or operated also based on data from the at least one sensor element, taking situations that may happen during transportation into account. The autonomously operation of the modularised vehicle may thus comprise receiving information about a platform height above the road surface at a target destination; and controlling the vehicle height before arriving at the target destination, so that a floor surface of the at least one functional module has a level corresponding to the level of the platform surface at the target destination. Controlling the vehicle height in relation to the road surface according to the method may be performed, by the control device comprised in any one of the modules, without instructions from the control centre.

The functional module is adapted to be releasably connected to the drive module for forming the assembled vehicle. The drive module comprises a pair of wheels and is configured to be autonomously operated and drive the assembled vehicle when the drive module and a functional module are connected. The functional module comprising at least one connecting means adapted for physically connecting the functional module to the drive module. The functional module may also comprise wheels.

The connecting means may comprise a physical interface for the purpose of physically connecting and disconnecting the modules. The drive module and the functional module each suitably comprises at least one physical interface for the purpose of physically connecting and disconnecting the modules. The physical interface on the drive module is connected to the control device, which is configured to control the physical interface on the drive module to physically connect and disconnect the modules. The functional module may be provided with an indentation. The indentation may be adapted for the drive module. Due to the indentation the length of the assembled vehicle will coincide with the length of the functional module. However, the functional module may be configured without an indentation and the drive module may be connected directly to the front side or the rear side of the functional module.

According to an example, controlling the vehicle height before arriving at the target destination, comprises controlling a suspension system of the at least one drive module, for adjusting the height of a body of the at least one drive module in relation to the pair of wheels.

The suspension system of the driving module is arranged between the wheels and a body of the driving module. The suspension system may comprise springs and dampers for improving the driving characteristics of the driving module and also of the assembled vehicle. The suspension system of the driving module may comprise adjusting means for controlling the vehicle height before arriving at the target destination. The control device may receive information about the platform height above the road surface at a target destination and thereafter the control device controls the adjusting means of the suspension system to adjust the vehicle height before arriving at the target destination.

According to an example, controlling the vehicle height before arriving at the target destination, comprises controlling a floor actuator of the at least one functional module, for adjusting the height of the floor of the functional module.

The floor of the functional module, or at least a part of the floor of the functional module may be raised and lowered in order to controlling the vehicle height. The definition of vehicle height may comprise the height of a component of the vehicle above the road surface. The floor of the functional module, which may be raised and lowered in order to controlling the vehicle height may be an inner floor of a passenger compartment of the functional module, on which passengers are situated. The floor of the functional module may also be an inner floor of a loading compartment of the functional module, on which load and goods may be situated. The floor of the functional module may be raised and lowered by the floor actuator, which may be connected to the control device. Before arriving at the target destination the control device may receive information about the platform height above the road surface and thereafter the control device controls the floor actuator to adjust the vehicle height before arriving at the target destination.

According to an example, receiving information about a platform height at a target destination comprises receiving information about the platform height from an external control centre.

The control device comprised in the drive module and/or the functional module may be configured to receive commands and instructions from the control centre or an off-board system and to execute the commands/instructions for driving the vehicle and also for controlling other functions in the vehicle, such as controlling the vehicle height before arriving at the target destination. This way, the assembled vehicle can drive itself based on the received commands and instructions.

According to an example, receiving information about a platform height comprises receiving information about the platform height from another vehicle.

Several vehicles, such as modularised vehicles may have a driving path similar to the present vehicle. Thus, another vehicle may have stopped at the platform and may have information of the platform height. The information of the platform height received by the other vehicle may be transmitted directly to the control device of the present vehicle or via the control centre. The information about the platform height may be transmitted to the present vehicle each time another vehicle arrives at the platform or each time the there is a change in the platform height.

The method further comprises, verifying that the level of the floor surface of the at least one functional module corresponds to the level of the platform surface at the target destination when the vehicle has arrived at the target destination.

The verification that the level of the floor surface and the level of the platform surface correspond to each other is important of a security reason, of a convenient reason, of a technical reason and of a time consuming reason. The verification may be performed by at least one sensor device arranged on the vehicle and/or at the platform.

The verification may alternatively, or in combination with the sensor device be performed by a verification software in the control device or in the control centre. The verification software may gathering all data and information about the platform height above the road surface at the target destination and the actual vehicle height above the road surface at the target destination and thus the floor surface of the at least one functional module corresponds to the level of the platform surface at the target destination. A secure boarding and exit of passengers to and from the functional module may thus be performed when the floor surface of the functional module corresponds to the level of the platform surface. **If** there for some reason should be a level difference between the floor surface and the platform surface passengers may stumble when boarding and exit the vehicle. A level difference between the floor surface and the platform surface may be inconvenient to pass for the passengers when boarding and exit the vehicle, which may also lead to an undesirable extension of time when boarding and exit the vehicle. Also, load and goods may safely be loaded and unloaded to and from the functional module. If there is a level difference between the floor surface and the platform surface load and goods may be destroyed when loaded and unloaded to and from the vehicle.

A signal comprising the information about the platform height above the road surface at the target destination may be received by the control device. The control device may control the vehicle height before arriving at the target destination, so that a floor surface of the at least one functional module has a level corresponding to the level of the platform surface at the target destination. The control device may verify that the level of the floor surface of the at least one functional module corresponds to the level of the platform surface at the target destination when the vehicle has arrived at the target destination. The verification may set a software mark (flag) of the control device to indicate that the level of the floor surface of the at least one functional module corresponds to the level of the platform surface at the target destination. As an example, the flag may be set to 1 in the level of the floor surface of the at least one functional module corresponds to the level of the platform surface at the target destination and the flag may be set to 0 when the level of the floor surface of the at least one functional module do not correspond to the level of the platform surface at the target destination. The definition of the expression that the floor surface of the at least one functional module corresponds to the level of the platform surface at the target destination may be that there is a small margin of error between the levels of the floor surface and the platform surface.

The method further comprises, controlling a door actuator for opening at least one door of the at least one functional module after verifying that the floor surface of the at least one functional module has a level corresponding to the level of the platform surface at the target destination. When it has been verified that the floor surface of the functional module corresponds to the level of the platform surface at the target destination doors of the functional module may be opened. The door actuator may be controlled by the control device. **If** the doors of the functional module are opened when there is a level difference between the floor surface and the platform surface the doors may be obstructed by the platform, which may lead to a technical malfunction of the doors and/or the door actuators. Opening of the doors after verifying that the floor surface of the at least one functional module has a level corresponding to the level of the platform surface may result in a secure and convenient boarding and exit of passengers to and from the functional module. Also, an undesirable extension of time when boarding and exit the vehicle may be avoided. Also, load and goods may safely be loaded and unloaded to and from the functional module if the doors are opened after verifying that the floor surface of the at least one functional module has a level corresponding to the level of the platform surface. If there is a level difference between the floor surface and the platform surface load and goods may be destroyed when loaded and unloaded to and from the vehicle.

The present disclosure also relates to a computer program comprising instructions which, when the program is executed by a computer, causes the computer to carry out the method disclosed above. The invention further relates to a computer-readable medium comprising instructions, which when executed by a computer causes the computer to carry out the method disclosed above.

Furthermore, the present disclosure relates to a control device for controlling a vehicle height in relation to the road surface of a modularised vehicle, the vehicle comprising: at least one drive module; and at least one functional module, wherein the at least one drive module comprises a pair of wheels and is configured to be autonomously operated and drive the assembled vehicle; and wherein the control device is comprised in any of the modules, the control device being configured to: receive information about a platform height above the road surface at a target destination; and control the vehicle height before arriving at the target destination, so that a floor surface of the at least one functional module has a level corresponding to the level of the platform surface at the target destination.

By such control device, boarding and exit the vehicle is facilitated. The time is minimized, the security is increased and damages minimized boarding and exit the vehicle. Also, loading and unloading of the vehicle is facilitated. The time is minimized, the security is increased and damages minimized when loading and unloading of the vehicle.

The control device is configured to receive information about a platform height above the road surface at a target destination before the vehicle is arriving at the target destination. The information may be received close to the moment when the vehicle is arriving at the target destination. However, it is also possible that the information about the platform height is received once the vehicle is assembled from the individual modules. As soon as there is a change in platform height above the road surface at a target destination, the control device may be configured to receive updated information about the platform height. A change in platform height above the road surface may take place due to reconstruction of the road and/or the platform.

The control device is configured to control the vehicle height before the vehicle arrives at the target destination. The vehicle height may be so controlled that a specific component of the vehicle is changing height. The vehicle height is controlled before arriving at the target destination, so that the floor surface of the at least one functional module may have a level above the road surface corresponding to the level of the platform surface above the road surface at the target destination. The level of the platform surface above the road surface may be the same level as the platform height above the road surface. The level of the floor surface above the road surface may be the same level as a floor surface height above the road surface.

The control device may be comprised in the drive module. However, the control device may alternatively be comprised in the functional module. Both the drive module and the functional module may be provided with a control device. The control device may be connected to a sensor device and to the connecting means.

According to an aspect, the control device is configured to control the vehicle height before arriving at the target destination, by controlling a suspension system of the at least one drive module, to adjust the height of a body of the at least one drive module in relation to the pair of wheels.

The suspension system of the driving module is arranged between the wheels and a body of the driving module. The suspension system may comprise springs and dampers for improving the driving characteristics of the driving module and also of the assembled vehicle. The suspension system of the driving module may comprise adjusting means for controlling the vehicle height before arriving at the target destination. The control device may be connected to the adjusting means of the suspension system. The control device may receive information about the platform height above the road surface at a target destination. The control device is configured to control the adjusting means of the suspension system based on the information about the platform height above the road surface at a target destination in order to adjust the vehicle height before arriving at the target destination.

According to a further aspect, the control device is configured to control the vehicle height before arriving at the target destination, by controlling a floor actuator of the at least one functional module, to adjust the height of the floor of the functional module.

The floor of the functional module, or at least a part of the floor of the functional module may be raised and lowered in order to controlling the vehicle height. The control device may be configured to raise and lower the floor of the functional module. The definition of vehicle height may comprise the height of a component of the vehicle above the road surface. The floor of the functional module, which may be raised and lowered in order to controlling the vehicle height may be an inner floor of a passenger compartment of the functional module, on which passengers are situated. The floor of the functional module may also be an inner floor of a loading compartment of the functional module, on which load and goods may be situated. The floor of the functional module may be raised and lowered by the floor actuator, which may be connected to the control device. Thus, the control device may be configured to control the floor actuator. Before arriving at the target destination the control device may be configured to receive information about the platform height above the road surface and thereafter the control device may be configured to control the floor actuator to adjust the vehicle height before arriving at the target destination.

According to a further aspect, the control device is configured to receive information about a platform height from an external control centre.

The control device comprised in the drive module and/or the functional module may be configured to receive commands and instructions from the control centre or an off-board system and to execute the commands/instructions for driving the vehicle and also for controlling other functions in the vehicle, such as controlling the vehicle height before arriving at the target destination. This way, the assembled vehicle can drive itself based on the received commands and instructions.

According to a further aspect, the control device is configured to receive information about a platform height from another vehicle.

Several vehicles, such as modularised vehicles may have a driving path similar to the present vehicle. Thus, another vehicle may have stopped at the platform and may have information of the platform height. The information of the platform height received by the other vehicle may be transmitted directly to the control device of the present vehicle or via the control centre. The control device is configured to receive information about a platform height from another vehicle each time another vehicle arrives at the platform or each time the there is a change in the platform height

According to an aspect, the control device is further configured to: verify that the level of the floor surface of the at least one functional module corresponds to the level of the platform surface when the vehicle has arrived at the target destination.

The control device may be configured to verify that the level of the floor surface and the level of the platform surface correspond to each other for of a security reason, of a convenient reason, of a technical reason and of a time consuming reason. At least one sensor device arranged on the vehicle and/or at the platform may provide the control device with information of the level of the floor surface of the functional module and the level of the platform surface. The verification may alternatively, or in combination with the sensor device be performed by a verification software in the control device or in the control centre. The verification software may gathering all data and information about the platform height above the road surface at the target destination and the actual vehicle height above the road surface at the target destination and thus the floor surface of the at least one functional module corresponds to the level of the platform surface at the target destination. A secure boarding and exit of passengers to and from the functional module may thus be performed when the floor surface of the functional module corresponds to the level of the platform surface. **If** there for some reason should be a level difference between the floor surface and the platform surface passengers may stumble when boarding and exit the vehicle. A level difference between the floor surface and the platform surface may be inconvenient to pass for the passengers when boarding and exit the vehicle, which may also lead to an undesirable extension of time when boarding and exit the vehicle. Also, load and goods may safely be loaded and unloaded to and from the functional module. **If** there is a level difference between the floor surface and the platform surface load and goods may be destroyed when loaded and unloaded to and from the vehicle.

A signal comprising the information about the platform height above the road surface at the target destination may be received by the control device. The control device may control the vehicle height before arriving at the target destination, so that a floor surface of the at least one functional module has a level corresponding to the level of the platform surface at the target destination. The control device may be configured to verify that the level of the floor surface of the at least one functional module corresponds to the level of the platform surface at the target destination when the vehicle has arrived at the target destination. The verification may set a software mark (flag) of the control device to indicate that the level of the floor surface of the at least one functional module corresponds to the level of the platform surface at the target destination. As an example, the flag may be set to 1 in the level of the floor surface of the at least one functional module corresponds to the level of the platform surface at the target destination and the flag may be set to 0 when the level of the floor surface of the at least one functional module do not correspond to the level of the platform surface at the target destination.

According to an aspect, the control device is further configured to: control a door actuator for opening at least one door of the at least one functional module after having verified that the floor surface of the at least one functional module has a level corresponding to the level of the platform surface at the target destination.

When it has been verified that the floor surface of the functional module corresponds to the level of the platform surface at the target destination doors of the functional module may be opened. The control device may be configured to control the door actuator. **If** the doors of the functional module are opened when there is a level difference between the floor surface and the platform surface the doors may be obstructed by the platform, which may lead to a technical malfunction of the doors and/or the door actuators. Opening of the doors after verifying that the floor surface of the at least one functional module has a level corresponding to the level of the platform surface may result in a secure and convenient boarding and exit of passengers to and from the functional module. Also, an undesirable extension of time when boarding and exit the vehicle may be avoided. Also, load and goods may safely be loaded and unloaded to and from the functional module if the doors are opened after verifying that the floor surface of the at least one functional module has a level corresponding to the level of the platform surface. If there is a level difference between the floor surface and the platform surface load and goods may be destroyed when loaded and unloaded to and from the vehicle.

Furthermore, the present disclosure relates to a modularised vehicle, assembled from a set of modules, wherein the modularised vehicle comprises a control device configured to control a vehicle height of the modularised vehicle.

Boarding and exit such a modularised vehicle is facilitated. The time is minimized, the security is increased and damages minimized boarding and exit the modularised vehicle. Also, loading and unloading of the modularised vehicle is facilitated. The time is minimized, the security is increased and damages minimized when loading and unloading of the modularised vehicle.

The present disclosure will now be further illustrated with reference to the appended figures.

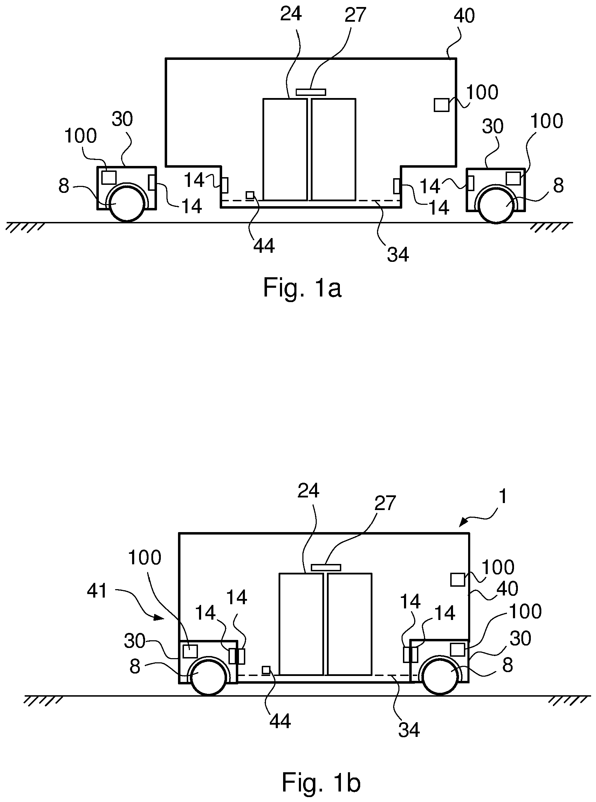

Fig. 1a schematically illustrates a side view of two drive modules 30 and a functional module 40 provided with a control device 100 according to an embodiment. The drive modules 30 are adapted to be releasably connected to the functional module 40 for forming the assembled vehicle 1. In fig. 1a the drive modules 30 and the functional module 40 are disconnected from each other. Each drive module 30 comprises a pair of wheels 32 and is configured to be autonomously operated and drive the assembled vehicle 1 when the drive modules 30 and a functional module 40 are connected. The functional module 40 comprising at least one connecting means 14 adapted for physically connecting the functional module 40 to the drive module 30. The control device 100 is comprised in any of the modules 30, 40. Thus, the control device 100 may be comprised in each of the drive modules 30. The control device 100 may alternatively be comprised in the functional module 40.

The connecting means 14 may comprise a physical interface 14 for the purpose of physically connecting and disconnecting the modules 30, 40. The drive module 30 and the functional module 40 each suitably comprises at least one physical interface 14 for the purpose of physically connecting and disconnecting the modules 30, 40. The physical interface 14 on the drive module 40 is connected to the control device 100, which is configured to control the physical interface 14 on the drive module 30 to physically connect and disconnect the modules 30, 40. The functional module 40 in fig. 1 is provided with an indentation 16, which is adapted for each drive module 30. Due to the indentation 16 the length of the assembled vehicle 1 will coincide with the length of the functional module 40. However, the functional module 40 may be configured without an indentation 16 and the drive modules 30 may be connected directly to the front side or the rear side of the functional module 40.

The functional module may be provided with at least one door 24. According to the embodiment the functional module 40 is provided with two doors 24. A door actuator 27 is arranged for opening and closing the doors 24 of the functional module 40.

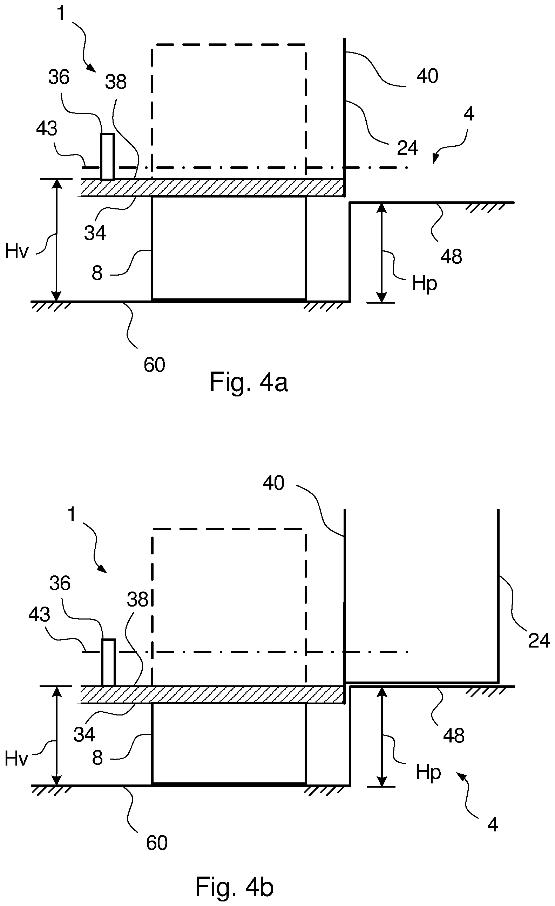

The functional module 40 is provided with a floor 34. A floor actuator 36 is arranged adjusting the height of the floor 34. The floor 34 is provided with a floor surface 38. At least one sensor device 44 is arranged on the functional module 40. The sensor device 44 may provide the control device 100 with information of the level of the floor surface 38 of the functional module 40. The sensor device 44 may also provide the control device 100 with information of the level of a platform surface 48 (fig. 4a). The sensor device 44 may also be arranged on the drive modules 30.

Fig. 1b schematically illustrates a side view of the two drive modules 30 and the functional module 40 provided with a control device 100 according to an embodiment. In fig. 1b the drive modules 30 and the functional module 40 are connected to each other. The connected drive modules 30 and functional module 40 together form the assembled vehicle 1. The drive modules 30 and the functional module 40 are connected by means of the connecting means 14.

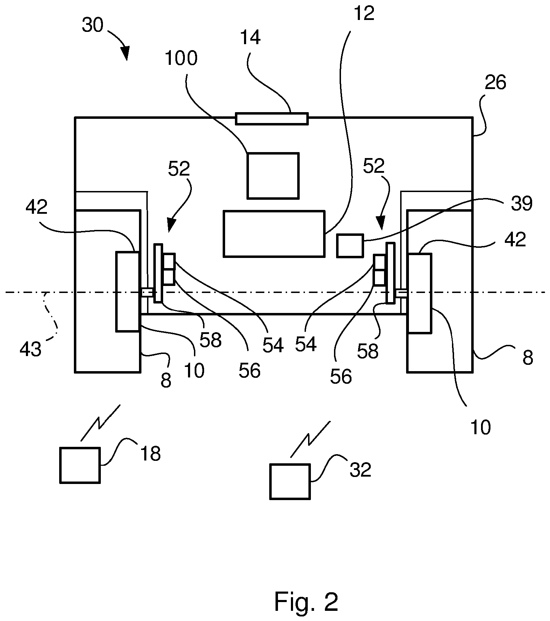

Fig. 2 schematically a drive module 30 provided with a control device 100 according to an embodiment. The drive module 30 may comprise a pair of wheels 8. A steering unit 39 may be connected to the wheels 8. The steering unit 39 may make the drive module 30 steerable. The pair of wheels 8 may be so arranged at the drive module 30 that a centre axis 43 of each wheel 8 coincides with each other. Each wheel 8 has a centre axis 43 and may be arranged at the drive module 30 so that each wheel 8 may rotate about its centre axis 43. When the centre axis 43 of each wheel 8 coincides with each other the drive module 30 has good manoeuvring abilities.

The drive module 30 may be provided with a suspension system 52 for the wheels 8. The height of a body 26 of the drive module 30 may be adjusted in relation to the wheels 8 by means of the suspension system 52. The control device 100 may be configured to control the vehicle height Hv by means of the suspension system 52. The suspension system 52 of the driving module 30 is arranged between the wheels 8 and a body 26 of the driving module 30. The suspension system 52 may comprise springs 54 and dampers 56 for improving the driving characteristics of the driving module 30 and also of the assembled vehicle 1. The suspension system 52 of the driving module may comprise adjusting means 58 for controlling the vehicle height Hv. The control device 100 may be connected to the adjusting means 58 of the suspension system 52.

The drive module 30 may comprise at least two connecting means 14. The connecting means 14 may be configured as interfaces for transferring electric energy and/or transmitting electric signals, and for physically connection.

The drive module 30 may comprise at least one propulsion unit 10 connected to the pair of wheels 8. The propulsion unit 10 may be an electric machine connected to the wheels 8. Two electric machines may be arranged as propulsion units 10 in the drive module 30. One electric machine 10 may be connected to one wheel 8 and the other electric machine 10 may be connected to the other wheel 8. The electric machines 10 may be arranged in the rim 42 of the wheels 8. The wheels 8 may thereby be driven independently of each other. The electric machines 10 may also work as generators and generate electric energy when braking the wheels 8. Instead of electric machines 10 as a propulsion unit 10, the at least one propulsion unit 10 may be an internal combustion engine, such as an otto engine or a diesel engine connected to the wheels 8.

The drive module 30 may comprise at least one energy storage unit 12 for providing the propulsion unit 10 with energy.

As mentioned above the drive module 30 may comprise the control device 100. The control device 100 may be configured to operate the drive module 30 as an independently driven unit. The control device 100 may be configured to transmit and receive information and control signals to and from an external control centre 18. The control device 100 may be configured to transmit and receive information and control signals to and from another vehicle 32

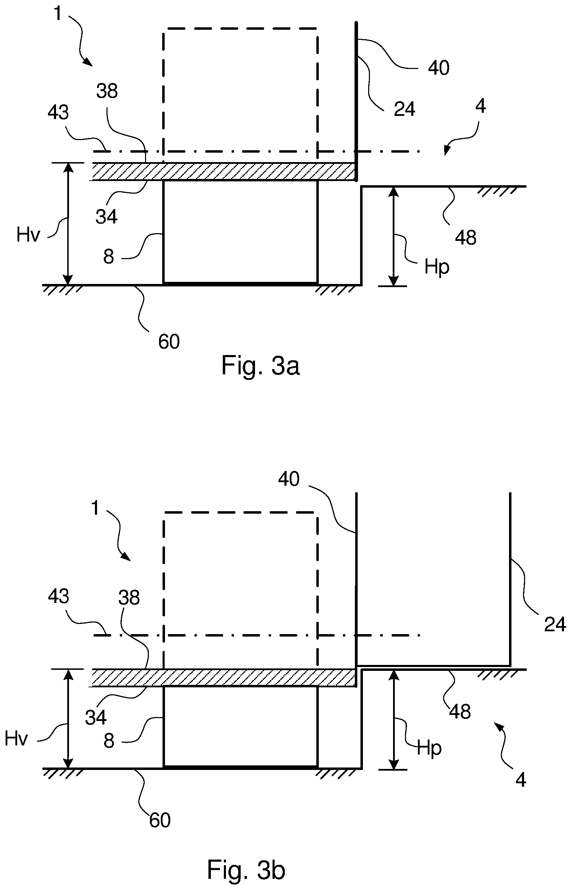

Fig. 3a schematically illustrate a section view of a modularised vehicle 1 controlled at different heights according to an embodiment. The control device 100 (fig. 1a) being configured to receive information about a platform height Hp above a road surface 60 at a target destination 4 and control the vehicle height Hv before arriving at the target destination 4, so that the floor surface 38 of the floor 34 of the functional module 40 has a level corresponding to the level of the platform surface 48 at the target destination 4. In fig. 3a the floor surface 38 of the functional module 40 has a level which not correspond to the level of the platform surface 48 at the target destination 4. The vehicle height Hv before arriving at the target destination 4 and during normal driving conditions of the vehicle 1 may be different to the vehicle height Hv, which corresponds to a level of the floor surface 38 of the functional module 40, which corresponds to the level of the platform surface 48 at the target destination 4. Therefore, the height of a body 26 (fig. 3) of the drive module 30 (fig. 3) may be adjusted in relation to the wheels 8 by means of the suspension system 52, so that the floor surface 38 of the functional module 40 has a level corresponding to the level of the platform surface 48 at the target destination 4. The control device 100 receives information about the platform height Hp above the road surface 60 at the target destination 4. Before arriving at the target destination 4 the control device 100 is configured to control the adjusting means 58 (fig. 2) of the suspension system 52 based on the information about the platform height Hp above the road surface 60 at the target destination 4 in order to adjust the vehicle height Hv before arriving at the target destination 4. The doors 24 of the function module in fig. 3a are closed.

Fig. 3b schematically illustrate a section view of a modularised vehicle 1 controlled at different heights according to an embodiment. In fig. 3b the vehicle height Hv has been controlled before arriving at the target destination 4, so that a floor surface 38 of the functional module 40 has a level corresponding to the level of the platform surface 48 at the target destination 4. The doors 24 of the function module in fig. 3b are open.

Fig. 4a schematically illustrate a section view of a modularised vehicle 1 controlled at different heights according to an embodiment. In fig. 4a the floor surface 38 of the floor 34 of the functional module 40 has a level which not correspond to the level of the platform surface 48 at the target destination 4. The vehicle height Hv before arriving at the target destination 4 and during normal driving conditions of the vehicle 1 may be different to the vehicle height Hv, which corresponds to a level of the floor surface 38 of the functional module 40, which corresponds to the level of the platform surface 48 at the target destination 4. Therefore, the height of the floor 34 may be adjusted in relation to the wheels 8 by means of a floor actuator 36 in the functional module 40, so that the floor surface 38 of the functional module 40 has a level corresponding to the level of the platform surface 48 at the target destination 4. The control device 100 may be configured to raise and lower the floor 34 of the functional module 40. Before arriving at the target destination 4 the control device 100 may be configured to receive information about the platform height Hp above the road surface 60 and thereafter the control device 100 may be configured to control the floor actuator 36 to adjust the vehicle height Hv before arriving at the target destination 4. The doors 24 of the function module in fig. 3a are closed.

Fig. 4b schematically illustrate a section view of a modularised vehicle 1 controlled at different heights according to an embodiment. In fig. 4b the vehicle height Hv has been controlled before arriving at the target destination 4, so that a floor surface 38 of the functional module 40 has a level corresponding to the level of the platform surface 48 at the target destination 4. The doors 24 of the function module 40 in fig. 4b are open.

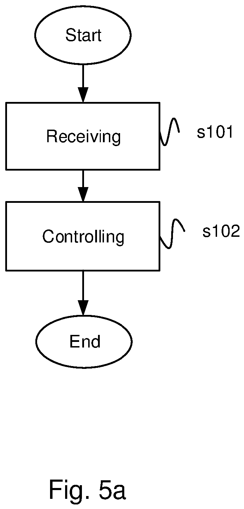

Fig. 5a illustrates a flow chart for a method, performed by a control device 100, for controlling a vehicle height Hv in relation to the road surface 60 of a modularised vehicle 1. The method thus relates to the controlling of the vehicle height Hv in relation to the road surface 60 of the modularised vehicle 1 disclosed in figures 1a - 4b. The vehicle 1 comprising at least one drive module 30 and at least one functional module 40, wherein the at least one drive module 30 comprises a pair of wheels 8 and is configured to be autonomously operated and drive the vehicle 1; and wherein the control device 100 is comprised in any of the modules 30, 40. the method comprising: receiving s101 information about a platform height Hp above the road surface 60 at a target destination 4; and controlling s102 the vehicle height Hv before arriving at the target destination 4, so that a floor surface 38 of the at least one functional module 40 has a level corresponding to the level of the platform surface 48 at the target destination 4.

According to an aspect, controlling s102 the vehicle height Hv before arriving at the target destination 4, comprises controlling a suspension system 52 of the at least one drive module 30, for adjusting the height of a body 26 of the at least one drive module 30 in relation to the pair of wheels 32. According to an aspect, controlling s102 the vehicle height Hv before arriving at the target destination 4, comprises controlling a floor actuator 36 of the at least one functional module 40, for adjusting the height of the floor 34 of the functional module 40. According to an aspect, receiving s101 information about a platform height Hp at a target destination 4 comprises receiving information about the platform height Hp from an external control centre 18. According to an aspect, receiving s101 information about a platform height Hp comprises receiving information about the platform height Hp from another vehicle 32.

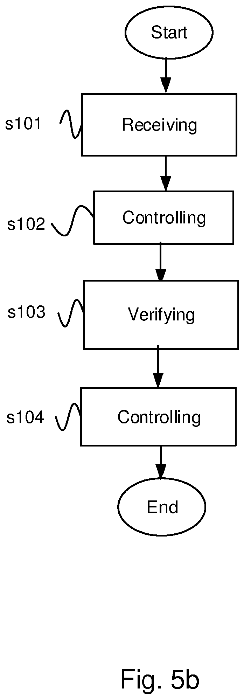

Fig. 5b illustrates a flow chart for a method, performed by a control device 100, for controlling a vehicle height Hv in relation to the road surface of a modularised vehicle 1. The method thus relates to the controlling of controlling a vehicle height Hv in relation to the road surface 60 of the modularised vehicle 1 disclosed in figures 1a - 4b. The method comprises receiving s101 information about a platform height Hp above the road surface 60 at a target destination 4; controlling s102 the vehicle height Hv before arriving at the target destination 4, so that a floor surface 38 of the at least one functional module 40 has a level corresponding to the level of the platform surface 48 at the target destination 4; verifying s103 that the level of the floor surface 38 of the at least one functional module 40 corresponds to the level of the platform surface 48 at the target destination 4 when the vehicle 1 has arrived at the target destination 4; and controlling s104 a door actuator 27 for opening at least one door 24 of the at least one functional module 40 after verifying s103 that the floor surface 38 of the at least one functional module 40 has a level corresponding to the level of the platform surface 48 at the target destination 4.

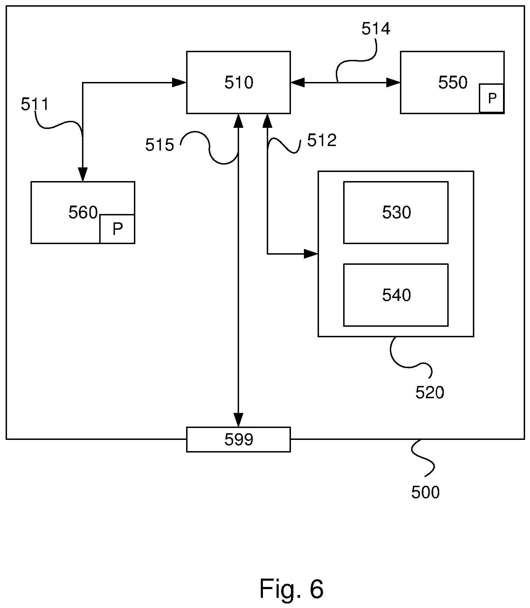

Figure 6 is a diagram of a version of a device 500. The control device 100 of any one of the drive modules 30 and functional module 40 may in a version comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer programme P which comprises routines for performing the safety method. The programme P may be stored in an executable form or in a compressed form in a memory 560 and/or in a read/write memory 550.

Where the data processing unit 510 is described as performing a certain function, it means that the data processing unit 510 effects a certain part of the programme stored in the memory 560 or a certain part of the programme stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicating with the data processing unit 510 via a data bus 514.

When data are received on the data port 599, they are stored temporarily in the second memory element 540. When input data received have been temporarily stored, the data processing unit 510 is prepared to effect code execution as described above.

Parts of the methods herein described may be effected by the device 500 by means of the data processing unit 510 which runs the programme stored in the memory 560 or the read/write memory 550. When the device 500 runs the programme, methods herein described are executed.

The foregoing description of the embodiments has been furnished for illustrative and descriptive purposes. It is not intended to be exhaustive, or to limit the embodiments to the variants described. Many modifications and variations will obviously be apparent to one skilled in the art. The embodiments have been chosen and described in order to best explicate principles and practical applications, and to thereby enable one skilled in the art to understand the embodiments in terms of its various embodiments and with the various modifications that are applicable to its intended use. The components and features specified above may, within the framework of the embodiments, be combined between different embodiments specified.

## Claims

1. A method, performed by a control device (100), for controlling a vehicle height (Hv) in relation to the road surface (60), the vehicle (1) comprising
at least one drive module (30); and
at least one functional module (40),
wherein the at least one drive module (30) comprises a pair of wheels (32) and is configured to be autonomously operated and drive the vehicle (1); and
wherein the control device (100) is comprised in any of the modules (30, 40), the method being **characterized by**:
receiving (s101) information from an external control centre (18) and/or from another vehicle about a platform height (Hp) above the road surface (60) at a target destination (4);
controlling (s102) the vehicle height (Hv) before arriving at the target destination (4), so that a floor surface (38) of the at least one functional module (40) has a level corresponding to the level of the platform surface (48) at the target destination (4) ; and
verifying (s103) that the level of the floor surface (38) of the at least one functional module (40) corresponds to the level of the platform surface (48) at the target destination (4) when the vehicle (1) has arrived at the target destination (4).

2. The method according to claim 1, wherein controlling (s102) the vehicle height (Hv) before arriving at the target destination (4), comprises controlling a suspension system (52) of the at least one drive module (30), for adjusting the height of a body (26) of the at least one drive module (30) in relation to the pair of wheels (32).

3. The method according to any one of claims 1 and 2, wherein controlling (s102) the vehicle height (Hv) before arriving at the target destination (4), comprises controlling a floor actuator (36) of the at least one functional module (40), for adjusting the height of the floor (34) of the functional module (40).

4. The method according to claim any one of the preceding claims, wherein the method comprises the further step of:
controlling (s104) a door actuator (27) for opening at least one door (24) of the at least one functional module (40) after verifying (s103) that the floor surface (38) of the at least one functional module (40) has a level corresponding to the level of the platform surface (48) at the target destination (4).

5. A computer program (P) comprising instructions which, when the program is executed by a control device (100; 500) of the vehicle according to claim 1, cause the control device (100; 500) to carry out the method according to any one of the preceding claims.

6. A computer-readable medium comprising instructions, which when executed by a computer (100; a control device (100; 500) of the vehicle according to claim 1, cause the control device (100; 500) to carry out the method according to any one of claims 1-4.

7. A control device (100) controlling a vehicle height (Hv) in relation to the road surface (60) of a modularised vehicle (1), the vehicle (1) being the modularised vehicle, comprising:
at least one drive module (30); and
at least one functional module (40),
wherein the at least one drive module (30) comprises a pair of wheels (32) and is configured to be autonomously operated and drive the assembled vehicle (1); and
wherein the control device (100) is comprised in any of the modules (30, 40), **characterized by** the control device (100) being configured to:
receive information from an external control centre (18) and/or from another vehicle about a platform height (Hp) above the road surface (60) at a target destination (4);
control the vehicle height (Hv) before arriving at the target destination (4), so that a floor surface (38) of the at least one functional module (40) has a level corresponding to the level of the platform surface (48) at the target destination (4); and
verify that the floor surface (38) of the at least one functional module (40) corresponds to the level of the platform surface (48) when the vehicle (1) has arrived at the target destination (4).

8. The control device (100) according to claim 7, wherein the control device (100) is configured to control the vehicle height (Hv) before arriving at the target destination (4), by controlling a suspension system of the at least one drive module (30), to adjust the height of a body of the at least one drive module (30) in relation to the pair of wheels (32).

9. The control device (100) according to any one of claims 7 and 8, wherein the control device (100) is configured to control the vehicle height (Hv) before arriving at the target destination (4), by controlling a floor actuator (36) of the at least one functional module (40), to adjust the height of the floor (34) of the functional module (40).

10. The control device (100) according to any one of claims 7-9 wherein the control device (100) further is configured to:
control a door actuator (27) for opening at least one door (24) of the at least one functional module (40) after having verified that the floor surface (38) of the at least one functional module (40) has a level corresponding to the level of the platform surface (48) at the target destination (4).

11. A modularised vehicle (1), assembled from a set of modules (30, 40),
wherein the modularised vehicle (1) comprises a control device (100) configured to control a vehicle height (Hv) of the modularised vehicle (1) according to any one of the claims 7 - 10.

## Patentansprüche

1. Verfahren, das von einer Steuervorrichtung (100) durchgeführt wird, um eine Fahrzeughöhe (Hv) in Bezug auf die Straßenoberfläche (60) zu steuern, wobei das Fahrzeug (1) umfasst
mindestens ein Antriebsmodul (30); und
mindestens ein Funktionsmodul (40),
wobei das mindestens eine Antriebsmodul (30) ein Paar Räder (32) umfasst und so konfiguriert ist, dass es autonom betrieben werden und das Fahrzeug (1) antreiben kann; und
wobei die Steuervorrichtung (100) in einem der Module (30, 40) enthalten ist, wobei das Verfahren **gekennzeichnet ist durch**:
Empfangen (s101) von Informationen von einer externen Leitstelle (18) und/oder von einem anderen Fahrzeug über eine Plattformhöhe (Hp) über der Straßenoberfläche (60) an einem Zielort (4);
Steuern (s102) der Fahrzeughöhe (Hv) vor Erreichen des Zielortes (4), so dass eine Bodenoberfläche (38) des mindestens einen Funktionsmoduls (40) ein Niveau hat, das dem Niveau der Plattformoberfläche (48) am Zielort (4) entspricht; und
Überprüfen (s103), dass das Niveau der Bodenoberfläche (38) des mindestens einen Funktionsmoduls (40) dem Niveau der Plattformoberfläche (48) am Zielort (4) entspricht, wenn das Fahrzeug (1) am Zielort (4) angekommen ist.

2. Verfahren nach Anspruch 1, wobei das Steuern (s102) der Fahrzeughöhe (Hv) vor der Ankunft am Zielort (4) ein Steuern eines Aufhängungssystems (52) des mindestens einen Antriebsmoduls (30) umfasst, um die Höhe eines Körpers (26) des mindestens einen Antriebsmoduls (30) in Bezug auf das Paar Räder (32) einzustellen.

3. Verfahren nach einem der Ansprüche 1 und 2, wobei das Steuern (s102) der Fahrzeughöhe (Hv) vor der Ankunft am Zielort (4) ein Steuern eines Bodenaktuators (36) des mindestens einen Funktionsmoduls (40) umfasst, um die Höhe des Bodens (34) des Funktionsmoduls (40) einzustellen.

4. Verfahren nach einem der vorhergehenden Ansprüche, wobei das Verfahren den weiteren Schritt umfasst:
Steuern (s104) eines Türaktuators (27) zum Öffnen mindestens einer Tür (24) des mindestens einen Funktionsmoduls (40), nachdem überprüft (s103) wurde, dass die Bodenoberfläche (38) des mindestens einen Funktionsmoduls (40) ein Niveau hat, das dem Niveau der Plattformoberfläche (48) am Zielort (4) entspricht.

5. Computerprogramm (P) mit Befehlen, die bei Ausführung des Programms durch eine Steuervorrichtung (100; 500) des Fahrzeugs nach Anspruch 1 bewirken, dass die Steuervorrichtung (100; 500) das Verfahren nach einem der vorhergehenden Ansprüche ausführt.

6. Computerlesbares Medium mit Befehlen, die bei Ausführung durch einen Computer (100; eine Steuervorrichtung (100; 500) des Fahrzeugs nach Anspruch 1 bewirken, dass die Steuervorrichtung (100; 500) das Verfahren nach einem der Ansprüche 1-4 ausführt.

7. Steuervorrichtung (100), die eine Fahrzeughöhe (Hv) in Bezug auf die Straßenoberfläche (60) eines modularisierten Fahrzeugs (1) steuert, wobei das Fahrzeug (1) das modularisierte Fahrzeug ist, umfassend:
mindestens ein Antriebsmodul (30); und
mindestens ein Funktionsmodul (40),
wobei das mindestens eine Antriebsmodul (30) ein Paar Räder (32) umfasst und so konfiguriert ist, dass es autonom betrieben werden und das zusammengebaute Fahrzeug (1) antreiben kann; und
wobei die Steuervorrichtung (100) in einem der Module (30, 40) enthalten ist, **dadurch gekennzeichnet, dass** die Steuervorrichtung (100) konfiguriert ist zum:
Empfangen von Informationen von einer externen Leitstelle (18) und/oder von einem anderen Fahrzeug über eine Plattformhöhe (Hp) über der Straßenoberfläche (60) an einem Zielort (4);
Steuern der Fahrzeughöhe (Hv) vor Erreichen des Zielortes (4), so dass eine Bodenoberfläche (38) des mindestens einen Funktionsmoduls (40) ein Niveau hat, das dem Niveau der Plattformoberfläche (48) am Zielort (4) entspricht; und
Überprüfen, dass die Bodenoberfläche (38) des mindestens einen Funktionsmoduls (40) dem Niveau der Plattformoberfläche (48) entspricht, wenn das Fahrzeug (1) am Zielort (4) angekommen ist.

8. Steuervorrichtung (100) nach Anspruch 7, wobei die Steuervorrichtung (100) so konfiguriert ist, dass sie die Fahrzeughöhe (Hv) vor der Ankunft am Zielort (4) durch Steuern eines Aufhängungssystems des mindestens einen Antriebsmoduls (30) steuert, um die Höhe eines Körpers des mindestens einen Antriebsmoduls (30) in Bezug auf das Paar Räder (32) einzustellen.

9. Steuervorrichtung (100) nach einem der Ansprüche 7 und 8, wobei die Steuervorrichtung (100) so konfiguriert ist, dass sie die Fahrzeughöhe (Hv) vor der Ankunft am Zielort (4) durch Steuern eines Bodenaktuators (36) des mindestens einen Funktionsmoduls (40) steuert, um die Höhe des Bodens (34) des Funktionsmoduls (40) einzustellen.

10. Steuervorrichtung (100) nach einem der Ansprüche 7-9, wobei die Steuervorrichtung (100) ferner konfiguriert ist zum:
Steuern eines Türaktuators (27) zum Öffnen mindestens einer Tür (24) des mindestens einen Funktionsmoduls (40), nachdem überprüft wurde, dass die Bodenoberfläche (38) des mindestens einen Funktionsmoduls (40) ein Niveau hat, das dem Niveau der Plattformoberfläche (48) am Zielort (4) entspricht.

11. Modularisiertes Fahrzeug (1), das aus einem Satz von Modulen (30, 40) zusammengesetzt ist,
wobei das modularisierte Fahrzeug (1) eine Steuervorrichtung (100) umfasst, die konfiguriert ist zum Steuern einer Fahrzeughöhe (Hv) des modularisierten Fahrzeugs (1) nach einem der Ansprüche 7-10.

## Revendications

1. Procédé, mis en œuvre par un dispositif de commande (100), pour commander une hauteur de véhicule (Hv) par rapport à la surface de route (60), le véhicule (1) comprenant
au moins un module d'entraînement (30) ; et
au moins un module fonctionnel (40),
dans lequel l'au moins un module d'entraînement (30) comprend une paire de roues (32) et est configuré pour être mis en fonctionnement de manière autonome et entraîner le véhicule (1) ; et
dans lequel le dispositif de commande (100) est compris dans l'un quelconque des modules (30, 40), le procédé étant **caractérisé par** :
la réception (s101) d'informations à partir d'un centre de commande externe (18) et/ou à partir d'un autre véhicule concernant une hauteur de quai (Hp) au-dessus de la surface de route (60) à une destination cible (4) ;
la commande (s102) de la hauteur de véhicule (Hv) avant l'arrivée à la destination cible (4), pour qu'une surface de plancher (38) de l'au moins un module fonctionnel (40) ait un niveau correspondant au niveau de la surface de quai (48) à la destination cible (4) ; et
la vérification (s103) du fait que le niveau de la surface de plancher (38) de l'au moins un module fonctionnel (40) correspond au niveau de la surface de quai (48) à la destination cible (4) lorsque le véhicule (1) est arrivé à la destination cible (4).

2. Procédé selon la revendication 1, dans lequel la commande (s102) de la hauteur de véhicule (Hv) avant l'arrivée à la destination cible (4), comprend la commande d'un système de suspension (52) de l'au moins un module d'entraînement (30), pour régler la hauteur d'un corps (26) de l'au moins un module d'entraînement (30) par rapport à la paire de roues (32).

3. Procédé selon l'une quelconque des revendications 1 et 2, dans lequel la commande (s102) de la hauteur de véhicule (Hv) avant l'arrivée à la destination cible (4) comprend la commande d'un actionneur de plancher (36) de l'au moins un module fonctionnel (40), pour régler la hauteur du plancher (34) du module fonctionnel (40) .

4. Procédé selon l'une quelconque des revendications précédentes, dans lequel le procédé comprend l'étape supplémentaire suivante :
la commande (s104) d'un actionneur de porte (27) pour ouvrir au moins une porte (24) de l'au moins un module fonctionnel (40) après vérification (s103) du fait que la surface de plancher (38) de l'au moins un module fonctionnel (40) a un niveau correspondant au niveau de la surface de quai (48) à la destination cible (4).

5. Programme d'ordinateur (P) comprenant des instructions qui, lorsque le programme est exécuté par un dispositif de commande (100 ; 500) du véhicule selon la revendication 1, amènent le dispositif de commande (100 ; 500) à effectuer le procédé selon l'une quelconque des revendications précédentes.

6. Support lisible par ordinateur comprenant des instructions qui, lorsqu'elles sont exécutées par un ordinateur (100 ; un dispositif de commande (100 ; 500) du véhicule selon la revendication 1, amènent le dispositif de commande (100 ; 500) à effectuer le procédé selon l'une quelconque des revendications 1 à 4.

7. Dispositif de commande (100) commandant une hauteur de véhicule (Hv) par rapport à la surface de route (60) d'un véhicule modulaire (1), le véhicule (1) étant le véhicule modulaire, comprenant :
au moins un module d'entraînement (30) ; et
au moins un module fonctionnel (40),
dans lequel l'au moins un module d'entraînement (30) comprend une paire de roues (32) et est configuré pour être mis en fonctionnement de manière autonome et entraîner le véhicule (1) assemblé ; et
dans lequel le dispositif de commande (100) est compris dans l'un quelconque des modules (30, 40), **caractérisé en ce que** le dispositif de commande (100) est configuré pour :
recevoir des informations à partir d'un centre de commande externe (18) et/ou à partir d'un autre véhicule concernant une hauteur de quai (Hp) au-dessus de la surface de route (60) à une destination cible (4) ;
commander la hauteur de véhicule (Hv) avant l'arrivée à la destination cible (4), pour qu'une surface de plancher (38) de l'au moins un module fonctionnel (40) ait un niveau correspondant au niveau de la surface de quai (48) à la destination cible (4) ; et
vérifier que la surface de plancher (38) de l'au moins un module fonctionnel (40) correspond au niveau de la surface de quai (48) lorsque le véhicule (1) est arrivé à la destination cible (4).

8. Dispositif de commande (100) selon la revendication 7, dans lequel le dispositif de commande (100) est configuré pour commander la hauteur de véhicule (Hv) avant l'arrivée à la destination cible (4), par commande d'un système de suspension de l'au moins un module d'entraînement (30), pour régler la hauteur d'un corps de l'au moins un module d'entraînement (30) par rapport à la paire de roues (32).

9. Dispositif de commande (100) selon l'une quelconque des revendications 7 et 8, dans lequel le dispositif de commande (100) est configuré pour commander la hauteur de véhicule (Hv) avant l'arrivée à la destination cible (4), par commande d'un actionneur de plancher (36) de l'au moins un module fonctionnel (40), pour régler la hauteur du plancher (34) du module fonctionnel (40).

10. Dispositif de commande (100) selon l'une quelconque des revendications 7 à 9, dans lequel le dispositif de commande (100) est en outre configuré pour :
commander un actionneur de porte (27) pour ouvrir au moins une porte (24) de l'au moins un module fonctionnel (40) après avoir vérifié que la surface de plancher (38) de l'au moins un module fonctionnel (40) a un niveau correspondant au niveau de la surface de quai (48) à la destination cible (4).

11. Véhicule modulaire (1), assemblé à partir d'un ensemble de modules (30, 40),
dans lequel le véhicule modulaire (1) comprend un dispositif de commande (100) configuré pour commander une hauteur de véhicule (Hv) du véhicule modulaire (1) selon l'une quelconque des revendications 7 à 10.
